# EUROPÄISCHE PATENTSCHRIFT

(11) **EP 3 394 491 B1**
(45) Veröffentlichungstag und Bekanntmachung des Hinweises auf die Patenterteilung: **29.01.2020**
(21) Anmeldenummer: 16820164.8
(22) Anmeldetag: 06.12.2016
(51) Int. Cl.: F16L 3/02, F16L 3/13, F24D 3/10, F16L 41/03

(54) **INSTALLATIONSELEMENT-MONTAGESYSTEM**
INSTALLATION-ELEMENT MOUNTING SYSTEM
SYSTÈME DE MONTAGE D'ÉLÉMENT D'INSTALLATION

(30) Priorität: 22.12.2015 DE 202015106989 U
(43) Veröffentlichungstag der Anmeldung: 31.10.2018
(73) Patentinhaber: REHAU AG + Co, 95111 Rehau (DE)
(72) Erfinder: BAUR-DÜRR, Stephan, 91085 Weisendorf (DE); KRÖBER, Carsten, 90768 Fürth (DE); KOCH, Klaus, Paul, 90513 Zirndorf (DE)
(86) Internationale Anmeldenummer: PCT/EP2016/002050
(87) Internationale Veröffentlichungsnummer: WO 2017/108161

(56) Entgegenhaltungen:
- EP-A1- 2 674 681
- DE-A1- 3 043 422
- DE-A1- 19 912 617
- US-A- 4 927 103
- US-A1- 2012 286 506
- US-A1- 2012 312 404

## Beschreibung

Die vorliegende Erfindung betrifft ein Installationselement-Montagesystem, insbesondere ein Heizkreisverteiler-, Heizleitverteiler- oder Sanitärverteiler-Montagesystem, das mindestens eine Wandhalterung für Installationselemente, insbesondere mindestens einen Heizkreisverteiler, Heizleitverteiler- oder Sanitärverteiler, mit einem länglichen Gehäuse, das einem zumindest abschnittsweise zum Aufnahmebereich komplementären Querschnitt aufweist und unter Formschluss in einen Aufnahmebereich der Wandhalterung aufnehmbar ist, umfasst.

Derartige Montagesysteme sind beispielsweise aus der DE 199 12 617 A1 bekannt. Die darin beschriebene Wandhalterung für Heizkreisverteiler umfasst einen Grundkörper mit länglicher Erstreckung, der zwei Aufnahmen für beabstandet voneinander anbringbare Heizkreisverteiler umfasst. Jeder Aufnahme sind passende Bügelelemente zugeordnet, die zusammen mit den Aufnahmebereichen jeweils einen Aufnahmeraum zur Aufnahme eines Heizkreisverteilers bilden. Optional kann zwischen dem Bügelelement und Grundkörper ein Anpassungskeil eingesetzt werden. Grundkörper, Bügelelement und Anpassungskeil sind aus Kunststoff spritzgegossene Elemente. Ihre Montage erfolgt mittels Spannelementen, beispielsweise mittels Schrauben. Nachteilig an dem Wandhalter wird gesehen, dass es sich dabei um ein mehrteiliges Element handelt, so dass lose Teile an die Montagestelle transportiert werden müssen, die an der Montagestelle verlorengehen können. Darüber hinaus ist der durch die Bügelelemente starr in der in der DE 199 12 617 A1 beschriebenen Wandhalterung festgelegt, so dass der Anschluss von an den Heizkreisverteiler anzuschließenden Rohren unter eingeschränkten Raumverhältnissen zu erfolgen hat. Durch eine axial wirkende Zugkraft kann der Heizkreisverteiler jedoch in Richtung seiner Längsachse aus dem Wandhalter herausgezogen werden. Weitere Montagesysteme sind aus der US 4 927 103 A, der US 2012/312404 A1, der US 2012/286506 A1 und der EP 2 674 681 A1 bekannt.

Dementsprechend liegt der vorliegenden Erfindung die Aufgabe zugrunde, ein Installationselement-Montagesystem, insbesondere für Heizkreisverteiler, zur Verfügung zu stellen, das zumindest einen der beschriebenen Nachteile des Stands der Technik überwindet. Insbesondere soll das erfindungsgemäße Installationselement-Montagesystem einen einfachen Aufbau besitzen und einen festen Sitz des Installationselements in der Wandhalterung aufweisen. Darüber hinaus soll das erfindungsgemäße Installationselement-Montagesystem kostengünstig herstellbar sein.

Diese und andere Aufgabe werden durch ein Installationselement-Montagesystem mit den Merkmalen des Anspruchs 1 gelöst. Bevorzugte Ausführungsformen des erfindungsgemäßen Installationselement-Montagesystem sind in den abhängigen Ansprüchen beschrieben. Gemäß der vorliegenden Erfindung wurde erkannt, dass ein stabiler Sitz des Installationselements in der Wandhalterung dadurch erzielt werden kann, dass der Aufnahmebereich der Wandhalterung eine C-förmige Profilierung besitzt. Diese C-förmige Profilierung des Aufnahmebereichs bewirkt, dass der Aufnahmebereich das Installationselement in zwei Raumrichtungen formschlüssig umgreifen kann. Dadurch wird neben dem Verhindern des Herausziehens des Installationselements aus dem Aufnahmebereich heraus auch ein Herausziehen in axialer Richtung verhindert. Damit kann auch ein Verschieben des Installationselements nach seiner Montage in Richtung seiner Längsachse verhindert werden.

Der Aufnahmebereich umfasst mindestens einen starren und mindestens einen beweglichen Bereich, die einstückig am Halterungsgrundkörper ausgebildet sind. Dies vereinfacht die Montage des Installationselements am Halterungsgrundkörper weiter.

Der bewegliche Bereich ist über ein scharnierartiges Gelenkelement einstückig an den Halterungsgrundkörper angeformt.

Dementsprechend liegt die vorliegende Erfindung in der Bereitstellung eines Installationselement-Montagesystems, insbesondere eines Heizkreisverteiler-Montagesystems, insbesondere Heizkreisverteiler-, Heizleitverteiler- oder Sanitärverteiler-Montagesystem, das mindestens eine Wandhalterung für Installationselemente mit mindestens einem Halterungsgrundkörper, der eine Wandauflagefläche und mindestens einen Aufnahmebereich für ein Installationselement aufweist, und mindestens ein Installationselement, insbesondere mindestens einen Heizkreisverteiler, Heizleitverteiler- oder Sanitärverteiler, mit einem länglichen Gehäuse, das einem zumindest abschnittsweise zum Aufnahmebereich komplementären Querschnitt aufweist und unter Formschluss in einen Aufnahmebereich der Wandhalterung aufnehmbar ist, wobei der Aufnahmebereich der Wandhalterung eine C-förmige Profilierung aufweist, die einen Abschnitt des Installationselements formschlüssig umgreift und ein Verschieben des in den Aufnahmebereich aufgenommenen Installationselements in Richtung seiner Längsachse verhindert. Der Aufnahmebereich umfasst mindestens einen starren und mindestens einen beweglichen Bereich, die einstückig am Halterungsgrundkörper ausgebildet sind, wobei der bewegliche Bereich über ein scharnierartiges Gelenkelement einstückig an den Halterungsgrundkörper angeformt ist.

Hinsichtlich des erfindungsgemäßen Installationselement-Montagesystems kann es sich als günstig erweisen, wenn mindestens ein Aufnahmebereich der Wandhalterung im Querschnitt im Wesentlichen kreisbogenförmig ausgebildet ist; und das längliche Gehäuse des Installationselements mindestens einen Abschnitt mit im Wesentlichen kreisförmigen, zum kreisbogenförmigen Aufnahmebereich komplementären Querschnitt aufweist. In einer derartigen Ausgestaltung des erfindungsgemäßen Installationselement-Montagesystems ist ein vereinfachter Anschluss von Funktionselementen, insbesondere von Rohren, an das Installationselement, insbesondere an den Heizkreis, Heizleit- oder Sanitärverteiler ermöglicht. Die kreisförmige Geometrie des Aufnahmebereichs und des darin aufgenommenen Abschnitts des Installationselements ermöglicht ein Drehen des Installationselements im in der Wandhalterung montierten Zustand. Dadurch kann das Installationselement zum Anschluss von Funktionselementen, insbesondere von Rohren, so gedreht werden, dass die Anschlussstücke für die Funktionselemente frei zugänglich sind. Nach erfolgtem Anschluss der Funktionselemente kann das Installationselement dann zurück gedreht werden.

Es kann auch bevorzugt sein, wenn der Kreisbogen des Aufnahmebereichs einen Mittelpunktswinkel im Bereich von 200° bis 340°, vorzugsweise im Bereich von 240° bis 310° und insbesondere etwa 270°, aufweist. Wird das Installationselement von einem derartigen kreisbogenförmigen Aufnahmebereich umschlossen, ist das Installationselement dabei hinreichend fest in den Aufnahmebereich aufgenommen, um eine stabile Verbindung zu bilden. Gleichzeitig kann Material am Halterungsgrundkörper eingespart werden.

Es kann auch günstig sein, wenn der im Wesentlichen kreisförmige Abschnitt des Installationselements erhaben am länglichen Gehäuse ausgebildet ist. Auch diese Ausgestaltung trägt dazu bei, dass sich das im Halterungsgrundkörper montierte Installationselement nach seiner Montage in Richtung seiner Längsachse nicht mehr verschieben lässt bzw. dieser Effekt weiter verstärkt ist.

Zusätzlich oder alternativ dazu kann es vorteilhaft sein, wenn das Installationselement modular aufgebaut ist und der im Wesentlichen kreisförmige Abschnitt zumindest im Verbindungsbereich zweier Module des Installationselements ausgebildet ist. Dadurch kann gewährleistet werden, dass die Module des Installationselements nicht ungewollt voneinander getrennt werden.

Es ist bevorzugt, wenn der bewegliche Bereich des Aufnahmebereichs durch ein Befestigungsmittel festlegbar ist, dass im Auslieferungszustand der Wandhalterung vorzugsweise einstückig zur Wandhalterung ausgebildet ist. In diesem Fall ist eine Befestigung des Installationselements an der Wandhalterung ohne auf der Baustelle mitzuführende Losteile möglich.

Darüber hinaus ist es von Vorteil, wenn der Halterungsgrundkörper in mindestens einem Aufnahmebereich mindestens ein Dehnungselement aufweist. Dadurch wird dem Halterungsgrundkörper eine gewisse Flexibilität verliehen, durch die das erfindungsgemäße Installationselement-Montagesystems in einem Zustand, in dem das Installationselement in den Aufnahmebereich aufgenommen und festgelegt ist, noch im Aufnahmebereich drehbar ist, um ein Anschließen von Funktionselementen, beispielsweise Rohren, an dem Installationselement zu erleichtern. In diesem Zusammenhang ist es bevorzugt, wenn mindestens ein Dehnungselement als Dehnungsfuge oder Dehnungsspalt ausgebildet ist. Vorzugsweise erstreckt sich diese Dehnungsfuge im geschlossenen Zustand des Aufnahmebereichs zwischen dem starren Bereich und dem beweglichen Bereich des Aufnahmebereichs.

Es kann auch günstig sein, wenn der das Installationselement mindestens ein Rastelement aufweist, die mit einer komplementären Rastaufnahme des Aufnahmebereichs in Eingriff bringbar ist. Dabei ist es bevorzugt, dass das Rastelement des Installationselements am Wesentlichen kreisförmige Abschnitt des Installationselements ausgebildet ist. Durch eine derartige Ausgestaltung wird das Installationselement in seiner gewünschten Position im Aufnahmebereich des Halterungsgrundkörpers festlegbar. Alternativ dazu kann dies auch dadurch realisiert werden, dass der Aufnahmebereich mindestens ein Rastelement aufweist, die mit einer komplementären Rastaufnahme des im Wesentlichen kreisförmige Abschnitts des Installationselements in Eingriff bringbar ist.

Zur Herstellung der erfindungsgemäßen Wandhalterung und des erfindungsgemäßen Installationselements hat sich Spritzgießen als bevorzugte Art der Herstellung erwiesen. Polyvinylchlorid (PVC), Polyethylen (insbesondere HDPE), Polyamid (PA; insbesondere Polyamid-6 und Polyamid-6,6) und Polypropylen (insbesondere statistisches Polypropylen PP-R) oder Blends der genannten Polymermaterialien dienen als bevorzugte Materialien für die erfindungsgemäße Wandhalterung und das erfindungsgemäße Installationselement. Die genannten Polymermaterialien oder Blends können auch in faserverstärkter, insbesondere glasfaserverstärkter Ausführung zum Einsatz kommen.

Im Folgenden wird die vorliegende Erfindung unter Bezugnahme auf die in den Figuren gezeigte Ausführungsform der vorliegenden Erfindung im Detail erläutert. Dabei zeigen
- Fig. 1: eine perspektivische Ansicht einer Ausführungsform einer Wandhalterung für Installationselemente eines Installationselement-Montagesystems gemäß der vorliegenden Erfindung;
- Fig. 2: eine perspektivische Teilansicht eines Aufnahmebereichs der in Fig. 1 dargestellten Wandhalterung;
- Fig. 3: eine partielle perspektivische Ansicht zweier Module eines Installationselements einer Ausführungsform des Installationselement-Montagesystems gemäß der vorliegenden Erfindung; und
- Fig. 4: eine perspektivische Ansicht eines Aufnahmebereichs der in Fig. 1 dargestellten Wandhalterung mit darin aufgenommenem Installationselement gemäß Fig. 3.

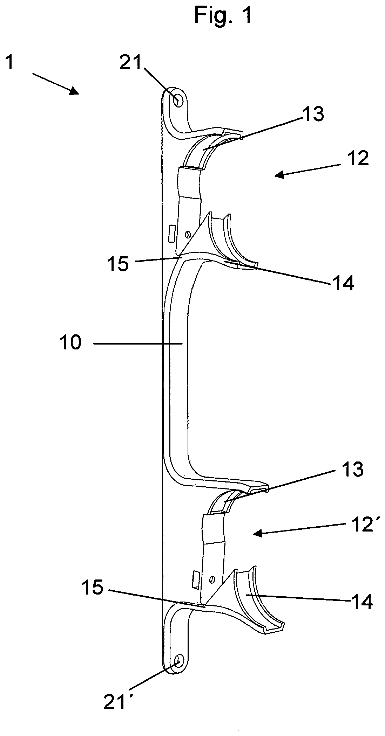

In Fig. 1 ist eine Ausführungsform einer Wandhalterung 1 für Installationselemente 30 eines Installationselement-Montagesystems gemäß der vorliegenden Erfindung in einer perspektivischen Ansicht gezeigt. Die Wandhalterung 1 für Installationselemente 30, insbesondere für Heizkreisverteiler, umfasst einen Halterungsgrundkörper 10. Der Halterungsgrundkörper 10 ist vorzugsweise länglich ausgebildet und verfügt über eine vorzugsweise ebene Wandauflagefläche. Im Bereich seiner beiden Enden weist der Halterungsgrundkörper 10 jeweils eine Durchgangsbohrung 21, 21' auf. Durch die Durchgangsbohrungen 21, 21' können Befestigungselemente wie Schrauben geführt werden, um den Halterungsgrundkörper 10 an einer Wand oder einer entsprechenden Tragstruktur zu befestigen. Alternativ oder zusätzlich dazu kann dies auch über eine zentrale Durchgangsbohrung erfolgen, die sich etwa in der Mitte oder im Schwerpunkt der Wandhalterung 1 befindet.

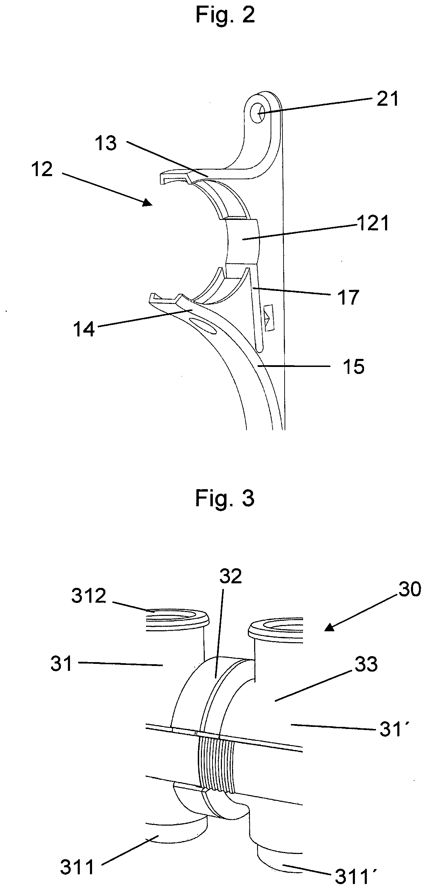

An der der Wandauflagefläche gegenüberliegenden Seite weist der Halterungsgrundkörper 10 zwei voneinander beabstandete Aufnahmebereiche 12, 12' auf. In der in Fig. 1 dargestellten Ausführungsform sind beide Aufnahmebereiche 12, 12' der Wandhalterung im Querschnitt im Wesentlichen kreisbogenförmig ausgebildet, wobei der Kreisbogen der Aufnahmebereiche 12, 12' in der in Fig. 1 gezeigten Ausführungsform einen Mittelpunktswinkel im Bereich von etwa 270° aufweist. In alternativen Ausführungsformen des erfindungsgemäßen Installationselement-Montagesystems können die Kreisbögen der Aufnahmebereiche 12, 12' einen Mittelpunktswinkel im Bereich von 200° bis 340° aufweisen, wobei die Mittelpunktswinkel der Aufnahmebereiche 12, 12' eines Halterungsgrundkörpers 10 gleich oder verschieden groß sein können. Durch einen Mittelpunktswinkel der Aufnahmebereiche 12, 12' in diesem Bereich wird das in den jeweiligen Aufnahmebereich 12, 12' aufzunehmende Installationselemente 30 hinreichend weit umgriffen, um eine stabile Aufnahme des Installationselements 30 in den jeweiligen Aufnahmebereich 12, 12' zu gewährleisten. Gleichzeitig kann Material am Halterungsgrundkörper eingespart werden. Der im Querschnitt im Wesentlichen kreisbogenförmige Abschnitt des jeweiligen Aufnahmebereichs 12, 12' weist bevorzugt eine Rastaufnahme 121 auf (Fig. 2), alternativ auch ein Rastelement.

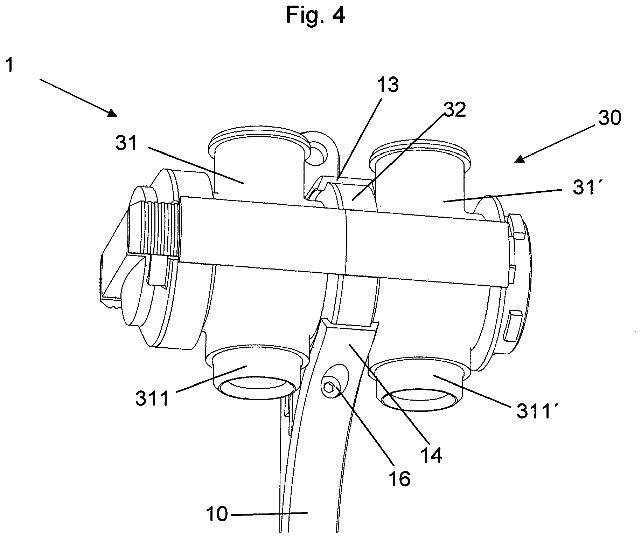

Die beiden Aufnahmebereiche 12, 12' werden jeweils aus einem in der in Fig. 1 gezeigten Ausführungsform oben angeordneten starren Bereich 13 und einem in der in Fig. 1 gezeigten Ausführungsform unten angeordneten, beweglichen Bereich 14 gebildet, wie in Fig. 2 gut zu erkennen ist, die eine vergrößerte, perspektivische Ansicht des Aufnahmebereichs 12 der in Fig. 1 dargestellten Wandhalterung 1 im geschlossenen Zustand des Aufnahmebereichs 12 zeigt. Der starre Bereich 13 und der bewegliche Bereich 14 sind einstückig an den Halterungsgrundkörper 10 angeformt, wobei dies im Falle des beweglichen Bereichs 14 über ein scharnierartiges Gelenkelement 15 erfolgt, das eine drehende Beweglichkeit des beweglichen Bereichs 14 zum Schließen des jeweiligen Aufnahmebereiche 12, 12' gewährleist. Die beiden im Wesentlichen kreisbogenförmige Aufnahmebereiche 12, 12' der Wandhalterung 1 sind mit einer C-förmigen Profilierung ausgestaltet. Der bewegliche Teil 14 kann durch ein Befestigungsmittel 16, beispielsweise ein Bolzen, ein Stift, eine Schraube und dergleichen, am Halterungsgrundkörper 10 festgelegt werden (Fig. 4). In bevorzugten Ausführungsform des erfindungsgemäßen Installationselement-Montagesystems ist im Auslieferungszustand der Wandhalterung 1 an den Halterungsgrundkörpers 10 je Aufnahmebereich 12, 12' ein Befestigungsmittel 16 einstückig und abtrennbar angeformt. Dabei handelt es sich bevorzugt um einen Kunststoffstift, der nach dem Abtrennen vom Halterungsgrundkörper 10 den beweglichen Teil 14 vorzugsweise irreversibel am Halterungsgrundkörper 10 festlegt. In diesem Fall ist eine Befestigung des Installationselements 30 an der Wandhalterung 1 ohne Losteile möglich.

Zwischen dem starren Bereich 13 und dem beweglichen Bereich 14 der Aufnahmebereiche 12, 12' befindet sich jeweils ein Dehnungselement, der in der dargestellten Ausführungsform des erfindungsgemäßen Installationselement-Montagesystems als Dehnungsspalt 17 ausgebildet ist. Dadurch erhält der jeweilige Aufnahmebereich 12, 12' des Halterungsgrundkörpers 10 eine gewisse Flexibilität. Damit bleibt ein in den jeweiligen Aufnahmebereich 12, 12' aufgenommenes Installationselement 30 noch im Aufnahmebereich 12, 12' drehbar, um ein Anschließen von Funktionselementen, beispielsweise Rohren, an dem Installationselement 30 zu erleichtern.

In Fig. 3 ist eine perspektivische Teilansicht eines Installationselements 30 gemäß einer Ausführungsform des erfindungsgemäßen Installationselement-Montagesystems gezeigt. Das Installationselement 30 ist modular aufgebaut, wobei in Fig. 3 der Verbindungsbereich zweier Module 31, 31' dargestellt ist. Derartige als Heizkreisverteiler ausgebildete Installationselemente 30 sind grundsätzlich bekannt, beispielsweise aus der DE 30 43 422 C2. Derartige Heizkreisverteiler sind vorzugsweise aus mehreren, zueinander identischen Modulen 31, 31' aufgebaut. Im zusammengesetzten Zustand ergeben mehrere derartige Module 31, 31' ein längliches Gehäuse 33, in dessen Mittellängsachse eine zentrale Bohrung vorhanden ist. An einander gegenüberliegenden Seiten des länglichen Gehäuses 33 sind Anschlusselemente 311, 312 für eine Rohrleitung und gegenüberliegend ein Ventil und Zubehör angeordnet.

Im Verbindungsbereich zwischen den beiden Modulen 31, 31' befindet sich ein Abschnitt 32 mit im Wesentlichen kreisförmigen Querschnitt, der in der in Fig. 3 dargestellten Ausführungsform erhaben zum länglichen Gehäuse 33 des Installationselements 30, 30'ausgebildet ist. Der Abschnitt 32 mit im Wesentlichen kreisförmigen Querschnitt weist vorzugsweise eine Rastelement (nicht dargestellt) auf, die zu der Rastaufnahme 121 des Aufnahmebereichs 12, 12' komplementär und mit dieser in Eingriff bringbar ist. In alternativen Ausführungsformen kann das Installationselement 30 an dem Abschnitt 32 mit im Wesentlichen kreisförmigem Querschnitt auch eine Rastaufnahme aufweisen, die zu einem entsprechenden Rastelement des jeweiligen Aufnahmebereichs 12, 12' komplementär und mit diesem in Eingriff bringbar ist. An den Randbereichen des Abschnitt 32 befinden sich Aussparungen, die eine verbesserte Aufnahme des Abschnitts 32 in der C-förmigen Profilierung der Aufnahmebereiche 12, 12' erlauben.

Bevorzugt umfasst ein erfindungsgemäßes Installationselement-Montagesystem zwei derartige Installationselemente 30 sowie zwei Wandhalterungen 1, in deren Aufnahmebereiche 12, 12' die Installationselemente 30 jeweils aufgenommen sind.

Zur Montage eines derartigen erfindungsgemäßen Installationselement-Montagesystems an einer Wand oder einer entsprechenden Tragstruktur wird zunächst der Halterungsgrundkörper 10 der Wandhalterung 1 mittels durch die Durchgangsbohrungen 21, 21' geführter Schrauben an der Wand oder der Tragstruktur festgelegt, wobei die Wandauflagefläche entsprechend zur Wand oder zur Tragstruktur gerichtet ist. Danach wird zunächst ein Installationselement 30 in den oberen Aufnahmebereich 12 des Halterungsgrundkörpers 10 aufgenommen. Dazu wird zunächst Abschnitt 32 mit im Wesentlichen kreisförmigen Querschnitt des Installationselements 30 in den starren Bereich 13 des oberen Aufnahmebereichs 12 der Wandhalterung 1 eingelegt, der eine zum Abschnitt 32 komplementäre, im Querschnitt im Wesentlichen kreisbogenförmige Ausgestaltung besitzt. Das Installationselement 30 wird nun solange im Aufnahmebereich 12 gedreht, bis das Rastelement des Abschnitts 32 in die dazu komplementäre Rastaufnahme 121 des Aufnahmebereichs 12 eingreift. Dann wird der bewegliche Bereich 14 des Aufnahmeabschnitt an das Installationselement 30 herangedrückt und durch ein Befestigungselement 16 (Fig. 4), beispielsweise eine Schraube oder ein einstückig und abtrennbar mit dem Halterungsgrundkörper 10 ausgebildeter Befestigungsstift, am starren Bereich 13 des Aufnahmeabschnitts 12 festgelegt. Das Installationselement 30 ist am Abschnitt 32 mit im Wesentlichen kreisförmigen Querschnitt nun unter Formschluss vom starren Bereich 13 und beweglichen Bereich 14 des Aufnahmebereichs 12 umgriffen. Darüber hinaus umgreift die C-förmige Profilierung des Aufnahmebereichs 12 den dazu komplementären Abschnitt 32 des Installationselements 30. Dadurch wird das im Aufnahmebereich 12 aufgenommene Installationselement 30 in zwei Richtungen umgriffen, so dass ein Verschieben des in den Aufnahmebereich 12 aufgenommenen Installationselements 30 in Richtung seiner Längsachse sowie ein Herausnehmen des Installationselements 30 aus der Wandhalterung 1 ohne übermäßigen Kraftaufwand wirksam verhindert ist. In entsprechender Weise wird ein zweites Installationselement 30 im unteren Aufnahmebereich 12' des Halterungsgrundkörpers 10 festgelegt. In der Wandhalterung 1 aufgenommen sind die beiden Installationselemente 30, 30' in horizontaler und in vertikaler Richtung versetzt zueinander angeordnet.

Zur Herstellung der Wandhalterung 1 und des Installationselements 30 des erfindungsgemäßen Installationselement-Montagesystems hat sich Spritzguß als bevorzugte Herstellungsmethode erwiesen. Polyvinylchlorid (PVC), Polyethylen (insbesondere HDPE), Polyamid (PA; insbesondere Polyamid-6 und Polyamid-6,6) und Polypropylen (insbesondere statistisches Polypropylen PP-R) oder Blends der genannten Polymermaterialien, vorzugsweise jeweils in faserverstärkter, insbesondere glasfaserverstärkter Ausführung, dienen als bevorzugte Materialien für die Wandhalterung 1 und das Installationselement 30 des erfindungsgemäßen Installationselement-Montagesystems.

Zum Anschluss von Funktionselementen, beispielsweise von Rohren, an das Installationselement 30 wird das Befestigungselement 16 nur lose in den starren Bereich 13 des Aufnahmebereichs 12 eingeführt. Dann wird das Installationselement 30 im Anschlussbereich so gedreht, dass die Anschlusselemente 311, 311' des Installationselements 30 vom Halterungsgrundkörper 10 wegweisen und leicht zugänglich sind. Daraufhin können die Funktionselemente an die Anschlusselemente 311, 311' des Installationselements 30 angeschlossen werden. Abschließend wird das Installationselement 30 soweit im Aufnahmebereich 12 zurückgedreht, bis das Rastelement des Abschnitts 32 in die dazu komplementäre Rastaufnahme 121 des Aufnahmebereichs 12 eingreift und in diesem Zustand wird das Befestigungselement 16 festgezogen. In analoger Weise kann der Anschluss von Funktionselementen, wie z. B. von Rohren, an das weitere Installationselement 30' im unteren Anschlussabschnitt 12 'erfolgen.

Die vorliegende Erfindung wurde unter Bezugnahme auf die in den Figuren gezeigte Ausführungsform im Detail erläutert. Es versteht sich jedoch, dass die vorliegende Erfindung nicht auf diese Ausführungsform beschränkt ist.

## Patentansprüche

1. Installationselement-Montagesystem, insbesondere Heizkreisverteiler-, Heizleitverteiler- oder Sanitärverteiler-Montagesystem, umfassend
(a) mindestens eine Wandhalterung (1) für Installationselemente (30) mit mindestens einem Halterungsgrundkörper (10), der eine Wandauflagefläche und mindestens einen Aufnahmebereich (12, 12') für ein Installationselement (30) aufweist; und
(b) mindestens ein Installationselement (30), insbesondere mindestens einen Heizkreisverteiler, Heizleitverteiler- oder Sanitärverteiler, mit einem länglichen Gehäuse (33), das einen zumindest abschnittsweise zum Aufnahmebereich (12, 12') komplementären Querschnitt aufweist und unter Formschluss in den Aufnahmebereich (12, 12') der Wandhalterung (1) aufnehmbar ist; wobei der Aufnahmebereich (12, 12') der Wandhalterung (1) eine C-förmige Profilierung aufweist, die einen Abschnitt (32) des Installationselements (30) formschlüssig umgreift und ein Verschieben des in den Aufnahmebereich (12) aufgenommenen Installationselements (30) in Richtung seiner Längsachse verhindert,
**dadurch gekennzeichnet, dass**
der Aufnahmebereich (12, 12') mindestens einen starren Bereich (13) und mindestens einen beweglichen Bereich (14) umfasst, die einstückig am Halterungsgrundkörper (10) ausgebildet sind,
wobei der bewegliche Bereich (14) über ein scharnierartiges Gelenkelement (15) einstückig an den Halterungsgrundkörper (10) angeformt ist.

2. Installationselement-Montagesystem nach Anspruch 1, **dadurch gekennzeichnet, dass** mindestens ein Aufnahmebereich (12, 12') der Wandhalterung (1) im Querschnitt im Wesentlichen kreisbogenförmig ausgebildet ist; und das längliche Gehäuse (33) des Installationselements (30) mindestens einen Abschnitt (32) mit im Wesentlichen kreisförmigen, zum kreisbogenförmigen Aufnahmebereich (12, 12') komplementären Querschnitt aufweist.

3. Installationselement-Montagesystem nach Anspruch 2, **dadurch gekennzeichnet, dass** der Kreisbogen des Aufnahmebereichs (12, 12') einen Mittelpunktswinkel im Bereich von 200° bis 340° aufweist.

4. Installationselement-Montagesystem nach Anspruch 2 oder Anspruch 3, **dadurch gekennzeichnet, dass** der im Wesentlichen kreisförmige Abschnitt (32) des Installationselements (30) erhaben am länglichen Gehäuse (33) ausgebildet ist.

5. Installationselement-Montagesystem nach Anspruch 4, **dadurch gekennzeichnet, dass** das Installationselement (30) modular aufgebaut ist und der im Wesentlichen kreisförmige Abschnitt (32) zumindest im Verbindungsbereich zweier Module (31, 31) des Installationselements (30) ausgebildet ist.

6. Installationselement-Montagesystem nach einem der Ansprüche 1 bis 5, **dadurch gekennzeichnet, dass** der bewegliche Bereich (13) des Aufnahmebereichs (12, 12') durch ein Befestigungsmittel (16) festlegbar ist, das im Auslieferungszustand der Wandhalterung (1) vorzugsweise einstückig zur Wandhalterung (1) ausgebildet ist.

7. Installationselement-Montagesystem nach einem der Ansprüche 1 bis 6, **dadurch gekennzeichnet, dass** das Installationselement (30) mindestens ein Rastelement aufweist, die mit einer komplementären Rastaufnahme (121) des Aufnahmebereichs (12, 12') in Eingriff bringbar ist.

8. Installationselement-Montagesystem nach Anspruch 7, **dadurch gekennzeichnet, dass** das Rastelement des Installationselements (30) am im Wesentlichen kreisförmige Abschnitt (32) des Installationselements (30) ausgebildet ist.

9. Installationselement-Montagesystem nach einem der Ansprüche 1 bis 7, **dadurch gekennzeichnet, dass** der Aufnahmebereich (12, 12') mindestens ein Rastelement aufweist, die mit einer komplementären Rastaufnahme des im Wesentlichen kreisförmige Abschnitts (32) des Installationselements (30) in Eingriff bringbar ist.

## Claims

1. Installation element mounting system, in particular heating circuit manifold, heat conducting manifold or sanitary manifold mounting system, comprising
(a) at least one wall bracket (1) for installation elements (30) having at least one bracket base body (10) which comprises a wall contact surface and at least one receiving region (12, 12') for an installation element (30); and
(b) at least one installation element (30), in particular at least one heating circuit manifold, heat conducting manifold or sanitary manifold, having an elongate housing (33) which has a cross-section that is complementary to the receiving region (12, 12') at least in some portions and can be received in form-fit manner in the receiving region (12, 12') of the wall bracket (1); wherein the receiving region (12, 12') of the wall bracket (1) has a C-shaped profile which engages in a form-fit manner around a portion (32) of the installation element (30) and prevents the installation element (30) received in the receiving region (12) from being displaced in the direction of its longitudinal axis,
**characterised in that**
the receiving region (12, 12') comprises at least one rigid region (13) and at least one movable region (14), which regions are integrally formed on the bracket base body (10),
wherein the movable region (14) is integrally moulded to the bracket base body (10) via a hinge-like joint element (15).

2. Installation element mounting system according to claim 1, **characterised in that** at least one receiving region (12, 12') of the wall bracket (1) is formed substantially arcuate in cross-section, and the elongate housing (33) of the installation element (30) comprises at least one portion (32) having a substantially circular cross-section that is complementary to the arcuate receiving region (12, 12').

3. Installation element mounting system according to claim 2, **characterised in that** the arc of the receiving region (12, 12') has a central angle in the range of from 200° to 340°.

4. Installation element mounting system according to claim 2 or claim 3, **characterised in that** the substantially circular portion (32) of the installation element (30) is formed to be raised on the elongate housing (33).

5. Installation element mounting system according to claim 4, **characterised in that** the installation element (30) is of modular construction, and the substantially circular portion (32) is formed at least in the connection region of two modules (31, 31') of the installation element (30).

6. Installation element mounting system according to any one of claims 1 to 5, **characterised in that** the movable region (13) of the receiving region (12, 12') can be secured by a fastening means (16) which is preferably formed integrally with the wall bracket (1) in the delivery state of the wall bracket (1).

7. Installation element mounting system according to any one of claims 1 to 6, **characterised in that** the installation element (30) comprises at least one latching element which can be brought into engagement with a complementary latch receptacle (121) of the receiving region (12, 12').

8. Installation element mounting system according to claim 7, **characterised in that** the latching element of the installation element (30) is formed on the substantially circular portion (32) of the installation element (30).

9. Installation element mounting system according to any one of claims 1 to 7, **characterised in that** the receiving region (12, 12') comprises at least one latching element which can be brought into engagement with a complementary latch receptacle of the substantially circular portion (32) of the installation element (30).

## Revendications

1. Système de montage d'élément d'installation, en particulier système de montage pour distributeur de circuit de chauffage, pour distributeur de conduite de chauffage ou pour distributeur sanitaire, comprenant
(a) au moins une fixation murale (1) pour des éléments d'installation (30) avec au moins un corps de base de fixation (10), qui présente une surface de support murale et au moins une zone de logement (12, 12') pour un élément d'installation (30) ; et
(b) au moins un élément d'installation (30), en particulier au moins un distributeur de circuit de chauffage, un distributeur de conduite de chauffage ou un distributeur sanitaire, avec un boîtier (33) allongé, qui présente une section transversale complémentaire au moins par endroits de la zone de logement (12, 12') et peut être logé moyennant une complémentarité de forme dans la zone de logement (12, 12') de la fixation murale (1), dans lequel la zone de logement (12, 12') de la fixation murale (1) présente un profilage en forme de C, qui entoure par complémentarité de forme une partie (32) de l'élément d'installation (30) et empêche un coulissement de l'élément d'installation (30) logé dans la zone de logement (12) en direction de son axe longitudinal,
**caractérisé en ce que**
la zone de logement (12, 12') comprend au moins une zone rigide (13) et au moins une zone déplaçable (14), qui sont réalisées d'un seul tenant au niveau du corps de base de fixation (10),
dans lequel
la zone déplaçable (14) est moulée par l'intermédiaire d'un élément d'articulation (15) de type charnière d'un seul tenant au niveau du corps de base de fixation (10).

2. Système de montage d'élément d'installation selon la revendication 1, **caractérisé en ce qu'**au moins une zone de logement (12, 12') de la fixation murale (1) est réalisée dans la section transversale sensiblement en forme d'arc de cercle, et le boîtier (33) allongé de l'élément d'installation (30) présente au moins une partie (32) avec une section transversale sensiblement en forme de cercle, complémentaire de la zone de logement (12, 12') en forme d'arc de cercle.

3. Système de montage d'élément d'installation selon la revendication 2, **caractérisé en ce que** l'arc de cercle de la zone de logement (12, 12') présente un angle au centre dans la plage de 200° à 340°.

4. Système de montage d'élément d'installation selon la revendication 2 ou la revendication 3, **caractérisé en ce que** la partie (32) sensiblement en forme de cercle de l'élément d'installation (30) est réalisée en relief au niveau du boîtier (33) allongé.

5. Système de montage d'élément d'installation selon la revendication 4, **caractérisé en ce que** l'élément d'installation (30) présente une construction modulaire et la partie (32) sensiblement en forme de cercle est réalisée au moins dans la zone de liaison de deux modules (31, 31') de l'élément d'installation (30).

6. Système de montage d'élément d'installation selon l'une quelconque des revendications 1 à 5, **caractérisé en ce que** la zone mobile (13) de la zone de logement (12, 12') peut être fixée par un moyen de fixation (16), qui est réalisé dans l'état de livraison de la fixation murale (1) de préférence d'un seul tenant par rapport à la fixation murale (1).

7. Système de montage d'élément d'installation selon l'une quelconque des revendications 1 à 6, **caractérisé en ce que** l'élément d'installation (30) présente au moins un élément d'encliquetage, qui peut être amené en prise avec un logement d'encliquetage (121) complémentaire de la zone de logement (12, 12').

8. Système de montage d'élément d'installation selon la revendication 7, **caractérisé en ce que** l'élément d'encliquetage de l'élément d'installation (30) est réalisé au niveau de la partie (32) sensiblement en forme de cercle de l'élément d'installation (30).

9. Système de montage d'élément d'installation selon l'une quelconque des revendications 1 à 7, **caractérisé en ce que** la zone de logement (12, 12') présente au moins un élément d'encliquetage, qui peut être amené en prise avec un logement d'encliquetage complémentaire de la partie (32) sensiblement en forme de cercle de l'élément d'installation (30).
